# EUROPÄISCHE PATENTSCHRIFT

(11) **EP 2 618 961 B1**
(45) Veröffentlichungstag und Bekanntmachung des Hinweises auf die Patenterteilung: **19.11.2014**
(21) Anmeldenummer: 11782033.2
(22) Anmeldetag: 20.09.2011
(51) Int. Cl.: B23Q 1/76, B23C 3/18

(54) **VERFAHREN UND EINRICHTUNG ZUR BEARBEITUNG VON LÄNGLICHEN, NICHT ROTATIONSSYMMETRISCHEN WERKSTÜCKEN IN FORM VON TURBINENSCHAUFELN**
METHOD AND DEVICE FOR MACHINING ELONGATE WORKPIECES THAT ARE NOT ROTATIONALLY SYMMETRICAL IN THE FORM OF TURBINE BLADES
PROCÉDÉ ET DISPOSITIF D'USINAGE DE PIÈCES ALLONGÉES SANS SYMÉTRIE DE RÉVOLUTION, SOUS LA FORME DE PALES DE TURBINES

(30) Priorität: 24.09.2010 DE 202010008628 U
(43) Veröffentlichungstag der Anmeldung: 31.07.2013
(73) Patentinhaber: Starrag AG, 9404 Rorschacherberg (CH)
(72) Erfinder: KELLER, Horst, CH-9422 Staad (CH); GEIGER, Roland, 9404 Rorschacherberg (CH)
(74) Vertreter: Rumrich, Gabriele
(86) Internationale Anmeldenummer: PCT/EP2011/004704
(87) Internationale Veröffentlichungsnummer: WO 2012/038064

(56) Entgegenhaltungen:
- WO-A1-2006/122440
- CH-A5- 686 878
- DE-A1- 2 846 851

## Beschreibung

Die Erfindung betrifft ein Verfahren und eine Einrichtung zur Bearbeitung von länglichen, nicht rotationssymmetrischen Werkstücken in Form von Turbinenschaufeln unter Verwendung einer das Werkstück abstützenden Lünette nach den Oberbegriffen des ersten und achten Patentanspruchs.

Bei der mechanischen Bearbeitung von länglichen Werkstücken werden diese häufig an den beiden Stirnseiten gespannt Durch eine so mögliche Rotation um die Längsachse durch geeignete Drehachsen kann das Werkstück auf allen Längsseiten ohne notwendiges Umspannen bearbeitet werden. Für bestimmte Werkstückgeometrien, z. B. das Fräsen von Turbinenschaufeln, ist eine solche Aufspannung notwendig, da über den ganzen Umfang der Längsseiten das Werkstück kontinuierlich bearbeitet werden muss. Bei anderen Werkstücken kann man das Werkstück in nur einer Aufspannung fertig bearbeiten (im Gegensatz zu dem Spannen auf einer Längsseite). Dadurch spart man Zeit und gewinnt Genauigkeit, da Fehler zwischen mehreren Aufspannungen vermieden werden.

Bei derartigen langen und relativ fragilen Bauteilen, wie es Turbinenschaufeln sind, besteht häufig das Problem, dass solche Werkstücke eine sehr geringe Steifigkeit besitzen, die weit kleiner als die Steifigkeit der verwendeten Maschine ist. Einerseits geben solche Bauteile aufgrund der Gewichtskraft und der Bearbeitungskräfte nach, was zu geometrischen Abweichungen der Werkstücke führt, andererseits wird für einen stabilen Schnitt in der mechanischen Bearbeitung eine hohe Steifigkeit benötigt. Es ist bekannt, rotationssymmetrische Werkstücke für die Drehbearbeitung mit einer Lünette abzustützen. Hierdurch wird die Nachgiebigkeit des Werkstückes dramatisch reduziert.

Zum Beispiel in US 4,177,701 A und DE 10 2007 029 492 B3 werden derartige Lünetten für die Drehbearbeitung rotationssymmetrischer Werkstücke beschrieben, die zwei zueinander schwenkbare Backen für die Aufnahme des rotationssymmetrischen Werkstückes aufweisen. Die Lünetten weisen an ihren Innendurchmessern Wälzlager auf, durch welche die Werkstücke drehbar gelagert und abgestützt sind. Für die Bearbeitung von länglichen Werkstücken mit dreidimensionalen Freiformflächen, wie sie beispielsweise bei Turbinenschaufeln auftreten, sind diese Lünetten nicht geeignet.

In DE 360222A wird eine Werkzeugmaschine zur Bearbeitung von länglichen Turbinenschaufeln beschrieben, wobei das Werkstück endseitig gespannt und sein Mittelteil durch ein Drehteil einer Lünette gehalten wird. Die Lünette und die Drehspindeln sind vertikal bewegbar angeordnet. Dabei kann die Lünette nicht in Richtung zum Werkstück ausgerichtet werden und ist auf der vertikalen Achse festgelegt. Die senkrechte Verstellung der Lünette erfolgt durch eine Schraubenspindel. Durch eine automatische Steuerung ist das Werkstück in der Lünette verriegelbar und entriegelbar. Das Drehteil der Lünette ist mit Gleitfingern zum Halten des Werkstückes versehen, die federnd gegen das Werkstück bewegt werden und mittels einer Einrichtung blockierbar sind. Dabei werden für die gleichzeitige Bearbeitung von 5 Werkstücken fünf Folgelünetten vorgesehen, die an einem Gegenständer mittels eines Schlittens vertikal zwischen einer unteren festen Konsole und einer oberen Konsole zum endseitigen Einspannen des Werkstückes verstellbar sind. Die fünf Turbinenschaufeln werden quer durch die Lünetten eingesetzt, die vorher entriegelt und an das eine Ende ihrer Laufstrecke verbracht wurden, und zwischen den beiden Konsolen gespannt. Die in die Drehspindeln eingesetzten Fräsköpfe beginnen die Bearbeitung an dem oberen Ende der Schaufeln, wobei der Schlitten mit den Lünetten ebenfalls auf die geeignete Höhe gebracht wird, damit die Lünetten in der unmittelbaren Nähe des Arbeitsbereichs der Werkzeuge halten können und die Werkstücke in den Lünetten mittels 4 Fingern geklemmt werden. Die Bearbeitung beginnt, während die in den Drehspindeln angebrachten Fräsköpfe die Werkstücke an ihrem oberen Ende in Angriff nehmen und eine absteigende Vorschubbewegung erleben. Die Drehteile der Lünetten werden durch die Schaufeln in Drehung mitgenommen, es existiert somit kein separater Rotationsantrieb der Lünetten. Während einer bestimmten Zeit verbleiben die Lünetten auf gleicher Ebene, und der sie tragende Schlitten ist auf dieser Ebene blockiert. Um zu vermeiden, dass die Fräsköpfe sich zu sehr vom Bereich der von den Lünetten entfernen, nachdem sie angestiegen sind, steigen die Lünetten um einen vorgegebenen Schritt ab. Hierzu erfolgt ein Anhalten der Bearbeitung und der Drehbewegung der Schaufeln, eine Entriegelung der Lünetten, die Freigabe des die Lünetten tragenden Schlittens, dessen Abstieg um einen Schritt, eine erneute Blockierung, das Wiedereinklemmen der Lünetten auf den Werkstücken und die Wiederaufnahme der Bearbeitung und der Drehbewegung der Schaufeln. Dadurch ist eine kontinuierliche und somit effektive Bearbeitung der Werkstücke nicht möglich. Weiterhin weist die gesamte Einrichtung zum Abstützen des/der Werkstücke/s einen komplizierten konstruktiven Aufbau auf.

Eine Spannvorrichtung zum umfangsseitigen Spannen von Werkstücken mit beliebiger Umfangskontur wird in DE 195 39 488 A1 vorgeschlagen, wobei zwei einander gegenüberliegend auf einem Grundkörper angeordnete Formspannbacken vorgesehen sind, deren Spannflächen jeweils durch eine Vielzahl von unabhängig voneinander gegen das zu spannende Werkstück fluidisch verschiebbaren und in der Spannstellung arretierbaren Stößeln gebildet werden. Der Grundkörper ist in einer Haltevorrichtung um eine senkrecht zur Spannrichtung gerichtete Achse über Lagerrollen drehbar gelagert. Der Antrieb des Grundkörpers erfolgt über einen am Umfang des Grundkörpers angeordneten Zahnkranz und entsprechende Antriebsräder mittels eines Antriebsmotors. Sowohl der Grundkörper als auch die Haltevorrichtung weisen sich nach außen erstreckende Ausnehmungen für das Einlegen des Werkstückes auf, wodurch die Gefahr des Auffedems bei großen Kräften gegeben ist. Die Spannung des Werkstückes erfolgt über zwei sich gegenüberliegend angeordnete und gegeneinander verfahrbare Schlitten, die in Richtung zum Werkstück mit Formspannbacken versehen sind. Jeder Formspannbacken weist eine Vielzahl von hydraulisch verstellbaren Stößeln auf, die zum Spannen des Werkstückes gegen dieses verstellbar sind. Um beispielsweise eine Turbinenschaufel herzustellen, wird zunächst an einem entsprechenden Rohling in einem Bearbeitungszentrum ein Halteende fertig bearbeitet. An diesem wird dann der Rohling eingespannt und die gekrümmten Schaufelflächen werden in bekannter Weise in einem oder mehreren Bearbeitungsvorgängen hergestellt. Da das noch zu bearbeitende gegenüberliegende Halteende relativ weit vom eingespannten Halteende entfernt ist, würden sich bei dessen Bearbeitung ohne weitere Maßnahmen Probleme ergeben. Daher wird die Haltevorrichtung zunächst in Längsrichtung soweit verschoben, dass sie neben den bearbeiteten Schaufelflächen positioniert ist. Hierzu dienen Längsführungen. Nun wird die Haltevorrichtung an Querführungen quer zur Längsrichtung der teilbearbeiteten Turbinenschaufel bewegt, wobei diese durch die Ausnehmung hindurch bis zur Einspannöffnung gelangt. Durch diese Querbewegung ist ein großer Arbeitsraum erforderlich. Die Haltevorrichtung wird nun so positioniert, dass die Längsachse der teilbearbeiteten Turbinenschaufel mit der Drehachse des Grundkörpers übereinstimmt. Nun wird die Turbinenschaufel mit Hilfe der Formspannbacken im Grundkörper gespannt. Jetzt kann das noch unbearbeitete Halteende der Turbinenschaufel bearbeitet werden. Hierzu kann die teilbearbeitete Turbinenschaufel mit Hilfe des Antriebsmotors in der erforderlichen Weise gedreht werden, wobei diese Drehung auch über das eingespannte, bereits bearbeitete Halteende der Turbinenschaufel erfolgen kann. Nach der Bearbeitung werden die Formspannbacken gelöst und die Haltevorrichtung seitlich von der Turbinenschaufel wegbewegt. Nun kann die nächste Turbinenschaufel eingespannt werden und der beschriebene Vorgang wiederholt sich. Da zum Abstützen durch die Lünette der Bearbeitungsvorgang unterbrochen werden muss, ist dies ebenfalls nachteilig für die Wirtschaftlichkeit des Bearbeitungsvorganges.

Es sind weiterhin zahlreiche Lösungen zum Spannen von Werkstücken in Form von Turbinenschaufeln bekannt (DE 10 2004 056 142 A1, DE 10 2005 001 555 A1, DE 100 26 829-C2), die mehrere Spannelemente aufweisen, die gegen die Werkstückoberfläche spannbar sind, jedoch gestatten diese keine Drehbewegung des Werkstückes.

Aus der Druckschrift DE 28 46 851 A1 ist ebenfalls eine Werkzeugmaschine zur Bearbeitung von Turbinenschaufeln bekannt, wobei das Werkstück durch ein Drehteil einer Lünette abgestützt wird. Mit dieser Lösung sollen die Verschiebungsvorgänge, die Entriegelung und die Verriegelung der Lünette auf ihrer Auflage und auf dem Werkstück automatisiert werden, wobei sich die die Lünette stets in dem Arbeitsbereich des Werkzeugs befinden soll, um so die Erzeugung von Vibrationen so weit wie möglich auszuschließen. Dabei kann sich das Werkstück in einem festen Teil der Lünette drehen. Die Maschine besitzt dabei Einrichtungen zur automatischen Steuerung für die Verriegelung und für die Entriegelung des Werkstücks in dem Drehteil der Lünette. Und es wird die Verschiebung der Lünette gesteuert. Die Lünette wird somit nicht aktiv rotatorisch angetrieben, sondern die Drehteile der Lünetten werden durch die Schaufeln in Drehung mitgenommen. Dadurch können Torsionen im Werkstück auftreten, die wiederum zu unerwünschten Toleranzabweichungen führen können. Weiterhin fährt die Lünette zum Einlegen des Werkstücks nicht über die Spannstelle.

In DE 100 26 829 A1 wird eine Vorrichtung zum Festspannen eines Werkstückes mit unebener Oberfläche beschrieben, wobei ein Spannelement oder ein antriebsmäßig mit dem Spannelement gekoppeltes Element mit einem Gewinde versehen ist, wodurch der linearen Vorschubbewegung des Spannelements eine Drehbewegung des betreffenden Gewindeelements gegenüber dem Spannblock zugeordnet ist, mit einem Rotationsaktuator, der mit dem verdrehbaren Gewindeelement zu dessen Drehantrieb gekoppelt ist; und mit wenigstens einem Spannelement zugeordneten, schaltbaren Mittel zur Arretierung des verdrehbaren Gewindeelements durch Klemmung und/oder Reibung, welches ein vorzugsweise elastisches Reibelement, insbesondere ein Klemmelement, umfasst, das eine drehmomentfreie Arretierung des verdrehbaren Gewindeelements erlaubt. Auch hier ist kein rotatorischer Antrieb des Spannelementes vorgesehen.

Eine Lünette, zur Bearbeitung von Drehteilen oder Kurbelwellen wird in der Druckschrift DE 10 2009 009 056 A1 beschrieben, Das an der Spannstelle rotationssymmetrische Werkstück wird von der Lünette zur Kompensation der Werkstückdurchbiegung abgestützt, die entlang der Bearbeitungsachse zum Wechseln des Werkstücks über eine Spannstelle verfahrbar ist. Die Verschiebung der Lünette entlang der Bearbeitungsachse erfolgt mittels einer Steuereinrichtung. Während der Bearbeitung einer Kurbelwelle dreht die Lünette passiv mit. Der gesamte Prozess des Positionierens der Lünette, des Einspannens und Zentrierens des Werkstücks läuft automatisch ab und wird von einer Steuereinrichtung gesteuert. Es wird zwar angedeutet, dass die Lünette mit einem entsprechendem Antrieb als Mittenantrieb eingesetzt werden kann, jedoch eben nur für rotationssymmetrische Werkstücke bzw. Kurbelwellen und es wird kein Hinweis auf eine konkrete Ausführung gegeben. Für die Bearbeitung nicht rotationssymmetrischer Werkstücke in Form von Turbinenschaufeln, die einen nicht rotationssymmetrischen Querschnitt an der Spannstelle der Lünette aufweisen, ist diese Lösung jedenfalls nicht geeignet.

Der Erfindung liegt die Aufgabe zugrunde, ein Verfahren und eine Einrichtung zur Bearbeitung von länglichen nicht rotationssymmetrischen Werkstücken in Form von Turbinenschaufeln, zu entwickeln, wobei eine Abstützung des Werkstückes mittels einer Lünette erfolgt und ein einfacher konstruktiver Aufbau der Einrichtung sowie ein verbesserter Bearbeitungsablauf gewährleistet sind.

Diese Aufgabe wird durch die Merkmale des ersten und achten Patentanspruchs gelöst.

Vorteilhafte Ausgestaltungen ergeben sich aus den Unteransprüchen.

Das Verfahren zur Bearbeitung von länglichen, nicht rotationssymmetrischen Werkstücken in Form von Turbinenschaufeln, erfolgt unter Nutzung einer ersten Spannstelle für ein erstes Ende des Werkstückes und einer zweiten Spannstelle für ein zweites Ende des Werkstückes, wobei eine Abstützung des Werkstückes mittels einer Lünette erfolgt, die zum Spannen des Werkstückes auf dessen nicht rotationssymmetrischen Querschnitt Spannelemente aufweist, wobei erfindungsgemäß
- nach dem Spannen des Werkstückes zwischen der ersten und der zweiten Spannstelle die Lünette mit ihren geöffneten Spannelementen entlang der Längsachse des Werkstückes in eine Abstützposition verfährt
   und
- während des Verfahrens der Lünette in die Abstützposition und/oder beim Verändern der Abstützposition der Lünette durch eine programmgesteuerte Rotation eines Drehteiles der Lünette eine Kollision zwischen den geöffneten Spannelementen der Lünette und dem Werkstück verhindert wird.

Die Lünette fährt zum Be- und Entladen des Werkstückes zumindest teilweise über die erste oder zweite Spannstelle, derart, dass der Bereich zwischen der ersten und der zweiten Spannstelle für das Einlegen und Spannen des Werkstückes zugänglich ist. Dadurch ist es möglich, die Lünette lediglich längs zum Werkstück zu Verfahren und auf eine aufwendige Querführung, die kostenintensiv ist und einen höheren Bauraum erfordert, zu verzichten. Weiterhin ergeben sich durch die erfindungsgemäße Lösung Vereinfachungen im Verfahrensablauf.

Nach dem Spannen des Werkstückes zwischen der ersten und der zweiten Spannstelle verfährt die Lünette entlang der Längsachse des Werkstückes in eine Abstützposition. Dabei werden vorteilhafter Weise während des Verfahrens der Lünette durch eine programmgesteuerte Rotation der Lünette Kollisionen mit dem Werkstück verhindert

Wenn sich die Lünette in der Abstützposition befindet, wird durch diese das Werkstück mittels eines oder mehrerer Spannelemente der Lünette gespannt, worauf die Bearbeitung des Werkstückes beginnt.

Bevorzugt sind die Spannelemente der Lünette in Form von hydraulischen Spannelementen ausgebildet. Zu deren Betätigung wird die Lünette in eine Andockstellung gedreht, in welcher eine Verbindung zu korrespondierenden Hydraulikelementen herstellbar und trennbar ist. In dieser Andockstellung werden die Spannelemente über die Hydraulikelemente mit einem Hydraulikdruck beaufschlagt und dadurch die Spannelemente betätigt und in eine Spannstellung überführt, wodurch das Werkstück in der Lünette gespannt und geklemmt wird, wobei durch die programmgesteuerte Rotation der Lünette eine Kollision zwischen den geöffneten Spannelementen der Lünette und dem Werkstück verhindert wird.

Anschließend wird die Verbindung zu den Hydraulikelementen unter Beibehaltung der Spannung gelöst und es erfolgt die Bearbeitung des Werkstückes.

Zur Bearbeitung des Bereiches des Werkstücks, den die Lünette überdeckt, wird die Spannung der Spannelemente der Lünette zum Werkstück gelöst, die Lünette entlang der Werkstücklängsachse verschoben und bedarfsweise an einer anderen Position wieder gespannt und geklemmt. Auch dabei erfolgt eine programmgesteuerte Rotation der Lünette, so dass eine Kollision der geöffneten Spannelemente oder anderer Bereiche der Lünette mit dem Werkstück vermieden wird.

Nachdem die Spannelemente gespannt und in dieser Position geklemmt und damit fixiert sind, kann der drehbare Teil der Lünette mit dem Werkstück um dessen Längsachse zur Gewährleistung einer umfangsseitigen Bearbeitung rotieren.

Es ist auch möglich, dass die Lünette bei der rotierenden Bearbeitung des Werkstücks zwischen den Spannstellen angeordnet ist und das Werkstück spannt und synchron zu den Antrieben der Spannstellen über einen Drehantrieb mitdreht so dass Torsionsspannungen im Werkstück reduziert oder verhindert werden.

Die Einrichtung, zur Bearbeitung der länglichen, nicht rotationssymmetrischen Werkstücken in Form von Turbinenschaufeln, wobei eine erste Spannstelle für das Spannen eines ersten Endes des Werkstückes und eine zweite Spannstelle für das Spannen eines zweiten Endes des Werkstückes vorgesehen sind und das Werkstück mittels einer Lünette abgestützt wird, die entlang einer Längsachse des Werkstückes bewegbar ist und zum Spannen des Werkstückes auf dessen nicht rotationssymmetrischen Querschnitt Spannelemente aufweist, die an einem Drehteil angeordnet und zwischen einer geschlossenen Spannstellung, mit welcher das Werkstück spannbar ist, und einer geöffneten Stellung, in der das Werkstück freigegeben ist, bewegbar sind, wobei erfindungsgemäß das Drehteil einen separaten Drehantrieb aufweist und dass die Einrichtung eine Steuerung zur programmgesteuerten Rotation des Drehteils der Lünette bei einer Verstellung der Lünette entlang einer Längsachse des Werkstückes aufweist, wobei die Spannelemente bei der Verstellung der Lünette in der geöffneten Position angeordnet sind.

Vorteilhafter Weise ist die Lünette mittels eines Schlittens und zugehöriger Führungen entlang der Längsachse der ersten und zweiten Spannstellen verfahrbar ist, wobei die Längsachsen der Spannstellen zueinander und zur Längsachse/der Bearbeitungsachse des Werkstückes koaxial sind.

Dadurch, dass die Lünette über die erste und/oder oder zweite Spannstelle fahrbar ist wird in dieser Position der Bereich zwischen der ersten und der zweiten Spannstelle für das Einlegen und Entnehmen des Werkstückes zugänglich, wodurch die bereits vorgenannt beschriebenen Vorteile zu verzeichnen sind.

Die Lünette weist dazu einen Durchbruch auf, der ein Hindurchragen des Werkstücks sowie der ersten und/oder zweiten Spannstelle gewährleistet.

Zum Spannen des Werkstückes in dem Bereich, der sich zwischen den endseitigen Spannstellen befindet, verfügt die Lünette über ein oder mehrere Spannelemente, die zwischen einer geschlossenen Spannstellung, mit welcher das Werkstück spannbar ist, und einer geöffneten Stellung bewegbar sind, wobei ein lichtes Maß zwischen den Spannelementen das Hindurchragen der ersten und/oder zweiten Spannstelle durch die Lünette gewährleistet.

Die Lünette weist ein Drehteil auf, welches mit dem Werkstück um dessen Längsachse drehbar ist. Das Drehteil wird in einem Grundkörper drehbar gelagert und weist Spannelemente zum Spannen des Werkstücks auf.
Vorteilhafter Weise sind das Drehteil und der Grundkörper umfangsseitig geschlossen ausgebildet, wodurch eine hohe Steifigkeit der Lünette erzielt wird. Diese umfangsseitig geschlossene Ausbildung ist nur dadurch möglich, dass die Lünette nicht quer über das zum Werkstück bewegt werden muss, sondern zum Einlegen des Werkstücks über eine der Spannstellen fährt.

Die Spannelemente der Lünette sind in einer Andockposition mit korrespondierenden Hydraulikelementen verbindbar oder trennbar sind, so dass gewährleistet ist, dass der drehbare Teil der Lünette ungehindert im Grundkörper nach dem Trennen von den Hydraulikelementen drehbar ist.

Vorteilhafter Weise ist das Drehteil mit einem separaten Drehantrieb versehen und mittels eines Schlittens und zugehöriger Führungen entlang der Längsachse der ersten und zweiten Spannstellen verfahrbar, wobei die Längsachsen der Spannstellen zueinander und zur Längsachse/der Bearbeitungsachse des Werkstückes koaxial sind.

Mit der Erfindung wird eine überraschend einfache Möglichkeit zum Einsatz einer Lünette geschaffen, wobei bei Beibehaltung des Abstandes zwischen den Spannstellen ein ungehindertes Einlegen des Werkstückes erfolgen kann und die Lünette nicht quer zu diesem sondern entlang der Längsachse bewegt wird, wodurch eine einfache und kompakte Einsichtung zur Bearbeitung von länglichen, nicht rotationssymmetrischen Werkstücken, insbesondere von Turbinenschaufeln, geschaffen wird.
Die Erfindung wird nachfolgend anhand eines Ausführungsbeispiels und zugehöriger Zeichnungen näher erläutert.

Es zeigen:
- Figur 1: die dreidimensionale Darstellung einer Einrichtung mit einer Lünette, die sich zum Einlegen eines Werkstück über einer ersten Spannstelle befindet,
- Figur 2: die dreidimensionale Darstellung einer Einrichtung mit einer Lünette, die sich in einer Abstützposition des Werkstücks befindet,
- Figur 3: die Darstellung der Lünette in der Vorderansicht mit geöffneten Spannelementen,
- Figur 4: einen Schnitt gemäß Figur 3 in der Andockposition,
- Figur 5: die Darstellung der Lünette in der Vorderansicht mit einer durch die Spannelemente gespannten Turbinenschaufel in der Bearbeitungsposition,
- Figur 6: einen Schnitt gemäß Figur 5.

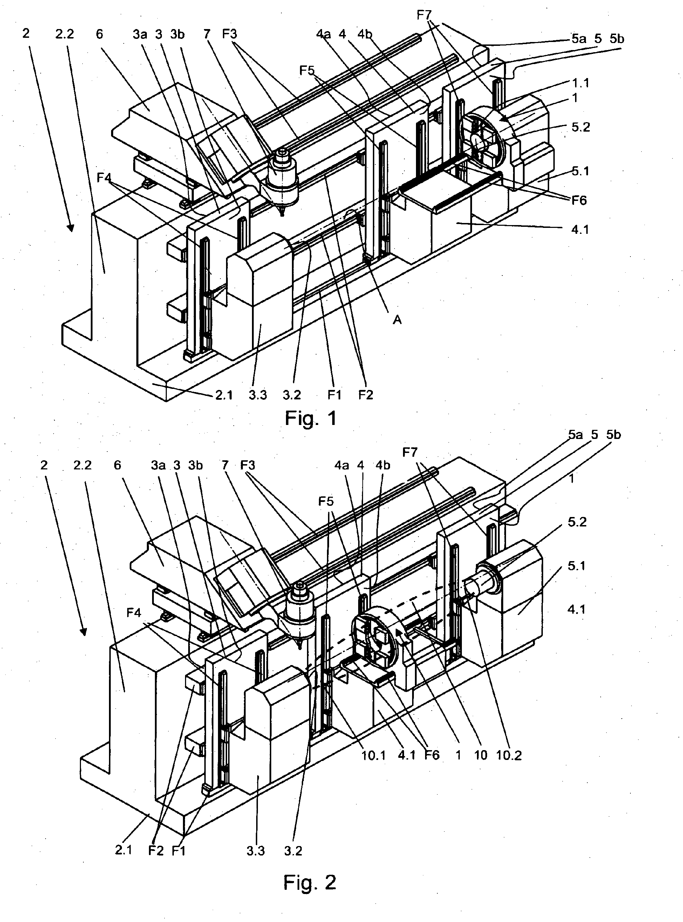

In Figur 1 und 2 wird eine dreidimensionale Darstellung einer Einrichtung gezeigt, wobei sich gemäß Figur 1 eine Lünette 1 in einer Position zum Einlegen eines nicht dargestellten Werkstücks befindet und gemäß Figur 2 die Lünette 1 in einer Abstützposition zur Bearbeitung eines sich in der Vorrichtung befindlichen, mit den gestrichelten Linien angedeuteten, Werkstückes angeordnet ist.

Die Einrichtung weist ein Bett 2 mit einem unteren horizontalen ersten Schenkel 2.1 und einem sich davon vertikal nach oben erstreckenden zweiten Schenkel 2.2 auf. Der untere Schenkel 2.1 weist an seiner Oberseite eine erste Führung F1 auf. An dem sich nach oben erstreckenden Bereich 2.2 des zweiten Schenkels 2.2 ist an der zur ersten Führung F1 weisenden vertikalen Seite eine zweite Führungen F2 aus zwei zueinander parallelen Führungsbahnen angeordnet. Auf der Oberseite des zweiten Schenkels 2.2 ist eine dritte Führung F3 mit zwei zueinander parallelen Führungsbahnen vorgesehen.
Auf dem ersten Schenkel 2.1 stützen sich ein erster Tisch 3, ein zweiter Tisch 4 und ein dritter Tisch 5 mit ihrer Unterkante ab und werden durch die erste Führung F1 geführt, die in Richtung zum Schenkel 2.2 weisenden inneren Seitenflächen 3a, 4a, 5a der Tische 3, 4, 5 werden durch die zweiten Führungen F2 geführt.

Der erste Tisch 3 weist an seiner äußeren Seitenfläche 3b eine sich vertikal erstreckende dritte Führung F5 mit zwei zueinander parallelen Führungsbahnen auf, durch welche ein erster Schlitten 3.1 vertikal verstellbar aufgenommen ist. An dem ersten Schlitten 3.1 ist eine erste Spannstelle 3.2 für die Spannung des hier nicht dargestellten Werkstückes vorgesehen.

An der äußeren Seitenfläche 4b des zweiten Tisches 4 sind ebenfalls sich vertikal erstreckende fünfte Führungen F5 mit zwei zueinander parallelen Führungsbahnen angeordnet, durch welche ein zweiter Schlitten 4.1 vertikal verstellbar aufgenommen ist. Auf der äußere Seitenfläche 4b des zweiten Schlittens 4.1 ist eine sechste Führung F6 aus zwei Führungsbahnen angeordnet, von denen die Lünette 1 horizontal verschiebbar in Richtung der ersten und zweiten Führungen F1, F2 geführt wird.

In der äußeren Seitenfläche 5b des dritten Tisches 5 ist eine sich ebenfalls vertikal erstreckende siebente Führung F7 mit zwei zueinander parallelen Führungsbahnen vorgesehen, durch welche ein dritter Schlitten 5.1 vertikal verstellbar aufgenommen ist. An dem zweiten Schlitten 5.1 ist in Richtung zur ersten Spannstelle 3.2 eine zweite Spannstelle 5.2 für die Spannung des hier nicht dargestellten Werkstückes ausgebildet. Der erste, zweite und dritte Tisch 3, 4, 5 sind im Wesentlichen baugleich ausgeführt. Dabei sind der zweite und der dritte Tisch 4, 5 relativ zueinander und zum ersten Tisch 3 entlang der ersten und zweiten Führung F1, F2 verschiebbar. Die Drehachse (Bearbeitungsachse) A des nicht dargestellten Werkstücks ist koaxial mit den Achsen der ersten Spannstelle 3.2, der zweiten Spannstelle 5.2 und der Lünette 1.

Gemäß Figur 1 ragt die zweite Spannstelle 5.2 durch einen Durchbruch 1.1 der Lünette 1, wodurch der Bereich zwischen der ersten Spannstelle 3.2 und der zweiten Spannstelle 5.2 zum einlegen eines Werkstückes frei ist. Dazu wurde der zweite Tisch 4 mit dem zweiten Schlitten 4.1 und die darauf befindlichen Lünette 1 in ihre äußerste (hier rechte) Endlage verfahren, so dass die Lünette 1 über die zweite Spannstelle 5.2 greift. Die zweite Spannstelle 5.2 ist dabei möglichst schlank ausgebildet.
Auf der oberen dritten Führung F3 des Bettes 1 ist ein Support 6 angeordnet und entlang der Bearbeitungsachse A verschiebbar, der einen Fräskopf 7 trägt, mit dem die Bearbeitung des Werkstückes erfolgt.

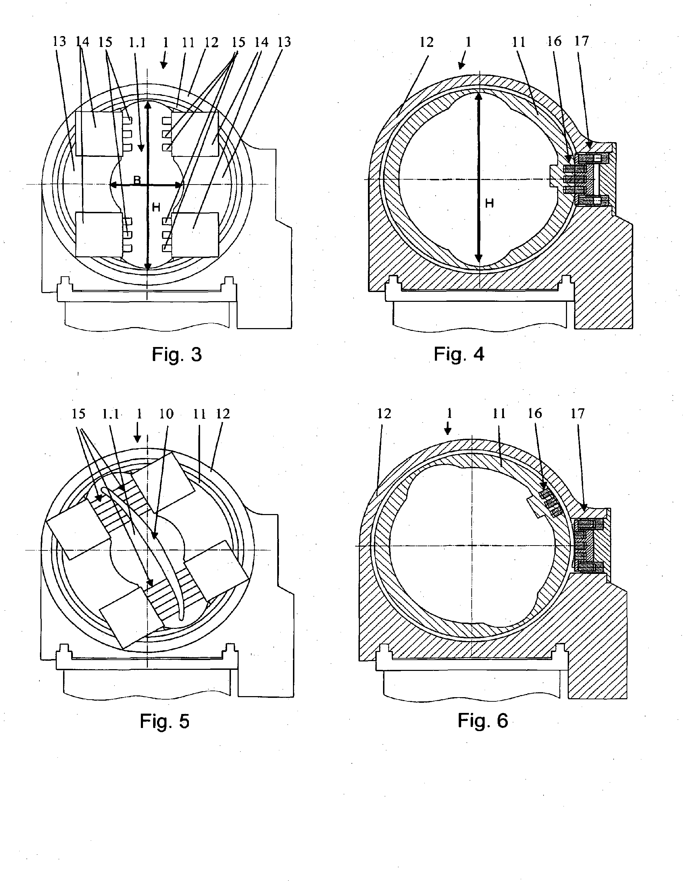

Entsprechend Figur 2 wurde ein Werkstück 10 mit einem ersten Ende 10.1 in der ersten Spannstelle und mit einem zweiten Ende 10.2 in der zweiten Spannstelle 5.2 gespannt und die Lünette 1 aus ihrer in Figur 1 dargestellten Endlage mit dem zweiten Tisch 4 (erste und zweite Führungen F1, F2) und über die sechsten Führungen F6 am zweiten Schlitten 4.1 in Richtung zur ersten Spannstelle 3.2 verfahren, so dass sich die Lünette 1 nun im wesentlichen mittig zwischen der ersten und zweiten Spannstelle 3.2, 5.2 in einer Abstützposition befindet. In dieser Position wird durch Spannelemente 15 (siehe Figur 5) der Lünette 1 das Werkstück 10 in einer Andockposition gespannt.
Die Lünette 1 ist aktiv um die Rotationsachse A und in Längsbewegung angetrieben. Daher kann nun automatisch eine Position zum Spannen der Turbinenschaufel/Werkstück 10 angefahren werden. Beim Bewegen im gespannten Zustand entstehen durch den aktiven Antrieb der Rotationsbewegung der Lünette 1 keine Reibungsmomente, die das Werkstück 10 tordieren könnten.

Die Rotation der Lünette 1 ist über einen nicht dargestellten Servomotor ausgeführt, der über eine Zahnradübersetzung eine gelagerte Welle antreibt (ebenfalls nicht dargestellt). Durch den modulartigen Aufbau der Vorrichtung ist diese einfach und kostengünstig herstellbar.

Es ist neben der in Figur 1 und 2 dargestellten Variante auch möglich, die erste Spannstelle ebenfalls so auszubilden, dass die Lünette zum Be- oder Entladen in axialer Richtung darüber fahren kann.

Figur 3 zeigt die Prinzipdarstellung der Lünette 1 in der Vorderansicht (in der Andockposition). Die Lünette 1 weist ein im Wesentlichen rotationssymmetrisches ringförmiges Drehteil 11 auf, welches umfangsseitig geschlossen und in einem ebenfalls umfangsseitig geschlossenen Grundkörper 12 drehbar gelagert ist. An dem Drehteil 11 sind zwei voneinander beabstandete Spannplatten 13 angeordnet, die einen Durchbruch 1.1 mit einer Höhe H und eine Breite B bilden, die geeignet sind, das Werkstück (hier nicht dargestellt) umfangsseitig aufzunehmen. Weiterhin ist die Breite B etwas größer als der Durchmesser der zweiten Spannstelle 5.2 (siehe Figur 1 und 2). An den Spannplatten 13 sind jeweils zwei Spannbacken 14 voneinander beabstandet und sich paarweise gegenüberliegend am hier oberen und unteren Bereich des Durchbruchs 1.1 vorgesehen, deren hydraulisch betätigbare Spannelemente 15 aufeinander zu bewegbar sind. Im mittigen Bereich sind keine Spannelemente vorhanden, um zu gewährleisten, dass die Lünette 1 mit dem Durchbruch 1.1 über die zweite Spannstelle 5.2 gefahren werden kann.

Ein Schnitt gemäß Figur 3 neben den Spannplatten in der Andockposition wird in Figur 4 gezeigt. Daraus ist ersichtlich, in der Andockstellung eine Verbindung von ersten Hydraulikelementen 16 zur Betätigung der Spannelemente 15 in dem Drehteil 11 zu korrespondierenden zweiten Hydraulikelementen 17 im Grundkörper 12 herstellbar ist. In dieser Position werden bei eingelegtem Werkstück über die ersten und zweiten Hydraulikelenente 16, 17 die Spannelemente 15 in Richtung zum Werkstück betätigt und das Werkstück gespannt. Anschließend kann die Verbindung zwischen den ersten und zweiten Hydraulikelementen 16, 17 getrennt werden, wobei die Spannung durch die Spannelemente 15 aufrecht erhalten wird.

Nun kann das Drehteil 11 der Lünette 1, wie in Figur 5 dargestellt, in dem Grundkörper 12 mit dem durch die Spannelemente 15 eingespannten Werkstück 10 in Form einer Turbinenschaufel in die Bearbeitungsposition gedreht werden. Aus dem in Figur 6 gezeigten Schnitt der Lünette 1 in Bearbeitungsposition, der wiederum außerhalb der Spannplatten liegt, wird deutlich, dass die ersten Hydraulikelemente 16 des Drehteiles 11 und die zweiten Hydraulikelemente 17 des Grundkörpers 12 getrennt und durch die Drehung des Drehteils 11 zueinander verschoben/verdreht sind.
Aus den Figuren 4 und 5 ist ersichtlich, dass das Drehteil 11 zwei sich gegenüberliegende Durchmessererweiterungen 11.1 aufweist, durch die der Durchbruch 1.1 gebildet wird, der die Höhe H aufweist.
Es ist selbstverständlich, dass bei einer Drehung des Drehteils der Lünette auch die
Antriebe der ersten Spannstelle 3.2 und der zweiten Spannstelle 5.2 synchron mitdrehen.

Die Lünette 1 erlaubt ein automatisches Spannen des Werkstückes 10. Hierbei ist wichtig, dass dieses Spannen kraftgesteuert erfolgt, d. h. alle Spannelemente 15 mit der gleichen Kraft auf das Werkstück 10 drücken. Dadurch wird das Werkstück 10 nicht durch den Spannzyklus deformiert. In der erfindungsgemäßen Lösung wird dies durch parallel geschaltete Hydraulikzylinder (nicht dargestellt), durch welche die Spannelemente 15 betätigbar sind, erreicht.
Die Lage der Spannzylinder und die Form der auf den Spannzylindern aufgebrachten Spannelemente 15 sind auf die Werkstückgeometrie anpassbar.

Nach dem Spannen müssen die Spannelemente 15 geklemmt und dadurch in ihrer Spannlage fixiert werden. Bei einem rein kraftgesteuerten Spannen würden sich die Spannelemente 15 durch Kraftänderungen (Bearbeitungskräfte bzw. Änderungen in der Richtung der Gewichtskraft relativ zum Werkstück) in ihrer Lage ändern.
Das Klemmen ist durch hydraulisch betätigte Klemmhülsen um die Hydraulikzylinder ausgeführt (ebenfalls nicht dargestellt). Die Klemmkraft muss während der Bearbeitung, also während einer endlosen Drehbewegung der Lünette 1, aufrechterhalten werden. Hierzu werden Hydraulikelemente in Form von Rückschlagventilen und ein mitdrehender Druckspeicher verwendet (nicht dargestellt).

Das Spannen, Klemmen und Lösen erfolgt über die Ankopplung der Lünette 1 in einer Andockstellung (Figur 4) zwischen Drehteil 11 und feststehendem Teil in Form des Grundkörpers 12 der Lünette.

### Die Arbeitsweise der Einrichtung ist folgende:

Die Lünette 1 wird zum Be- und Entladen auf die Seite über eine Spannstelle, hier erste Spannstelle 5.2, gefahren. Der Spannbereich des Werkstückes 10 wird an einer Stirnseite so ausgeführt, dass die Lünette 1 in offener Stellung der Spannelemente 15 aus einer axialen "Endposition" über diese fahren kann, so dass der Bereich zwischen der ersten Spannstelle 3.2 und der zweiten Spannstelle 5.2 für die zwei Stirnseiten des Werkstücks 10 frei bleibt.

Nach dem Beladen des Werkstückes 10 und der Spannung an dessen Stirnseiten verfährt die Lünette 1 aus der axialen Endposition im Bereich der zweiten Spannstelle 5.2 per NC Programm entlang der Längsachse/Bearbeitungsachse A (Figur 2) über das Werkstück bis zur gewünschten Abstützposition und nimmt dieses somit umfangsseitig auf. Durch eine NC Programm gesteuerte Rotation der Lünette 1 werden Kollisionen mit dem Werkstück 10 verhindert.

Das Werkstück 10 und die Lünette 1 werden anschließend in die Andockstellung (Figur 3 und 4) gedreht. Der Hydraulikdruck wird angekoppelt und das Werkstück 10 gespannt und geklemmt. Nach dem Abkoppeln der Hydraulik kann die Lünette 1 mit dem Werkstück 10 in die Bearbeitungsposition gedreht werden (Figur 5 und 6) und die Bearbeitung beginnen. Um den Bereich, in dem die Lünette 1 steht, bearbeiten zu können, wird diese anschließend gelöst, verschoben und evtl. an einer anderen Position wieder gespannt und geklemmt.

Mit der erfindungsgemäßen Lösung ist es gemäß eines nicht dargestellten Ausführungsbeispieles auch möglich, die Lünette mit dem Bearbeitungsfortschritt entlang der Längsachse A zu verschieben, wenn die Spannung durch die Spannelemente entsprechend ausgelegt wird.
Es wird insgesamt ein effektives Verfahren zur Bearbeitung nicht rotationssymmetrischer Werkstücke geschaffen. Durch die Verwendung einer umfangsseitig geschlossenen Lünette wird eine Aufbiegung durch die Spannkräfte der Spannelemente verhindert.
Es ist zwischen der Beschickungs- und Entnahmeposition und der Bearbeitungsposition lediglich eine axiale hin- und her- Bewegung der Lünette erforderlich, wodurch ein geringer Arbeitsraum benötigt und der konstruktive Aufbau einfacher und sicherer wird.

## Patentansprüche

1. Verfahren zur Bearbeitung von länglichen, nicht rotationssymmetrischen Werkstücken in Form von Turbinenschaufeln, wobei eine erste Spannstelle für ein erstes Ende des Werkstückes und eine zweite Spannstelle für ein zweites Ende des Werkstückes vorgesehen sind und eine Abstützung des Werkstückes mittels einer Lünette erfolgt, die zum Spannen des Werkstückes auf dessen nicht rotationssymmetrischen Querschnitt Spannelemente aufweist, **dadurch gekennzeichnet, dass**
- nach dem Spannen des Werkstückes zwischen der ersten und der zweiten Spannstelle die Lünette mit ihren geöffneten Spannelementen entlang der Längsachse des Werkstückes in eine Abstützposition verfährt
und
- dass während des Verfahrens der Lünette in die Abstützposition und/oder beim Verändern der Abstützposition der Lünette durch eine programmgesteuerte Rotation eines Drehteiles der Lünette eine Kollision zwischen den geöffneten Spannelementen der Lünette und dem Werkstück verhindert wird.

2. Verfahren nach Anspruch 1, **dadurch gekennzeichnet, dass** die Lünette zum Beund Entladen des Werkstückes zumindest teilweise über die erste oder zweite Spannstelle fährt derart, dass der Bereich zwischen der ersten und der zweiten Spannstelle für das Einlegen und Spannen des Werkstückes zugänglich ist.

3. Verfahren nach Anspruch 1 oder 2, **dadurch gekennzeichnet, dass** in der Abstützposition die Lünette das Werkstück mittels eines oder mehrerer Spannelemente spannt und anschließend die Bearbeitung des Werkstückes erfolgt.

4. Verfahren nach einem der Ansprüche 1 bis 3, **dadurch gekennzeichnet, dass** die Spannelemente der Lünette in Form von hydraulischen Spannelementen ausgebildet sind, die sich am Drehteil der Lünette befinden und dass das Drehteil der Lünette zur Betätigung der Spannelemente in eine Andockstellung gedreht wird, in welcher eine Verbindung zu korrespondierenden Hydraulikelementen herstellbar und trennbar ist.

5. Verfahren nach einem der Ansprüche 1 bis 4, **dadurch gekennzeichnet, dass** in der Andockstellung über die Hydraulikelemente ein Hydraulikdruck an die Spannelemente angekoppelt und dadurch das Werkstück gespannt und geklemmt wird und dass anschließend die Verbindung zu den Hydraulikelementen unter Beibehaltung der Spannung gelöst wird und anschließend das Drehteil der Lünette aus der Andockstellung drehbar ist und die Bearbeitung des Werkstückes erfolgt.

6. Verfahren nach einem der Ansprüche 1 bis 5, **dadurch gekennzeichnet, dass** zur Bearbeitung des Bereiches der Werkstücke, den die Lünette überdeckt, deren Spannung zum Werkstück gelöst, die Lünette entlang der Bearbeitungsachse verschoben und bedarfsweise an einer anderen Position wieder gespannt und geklemmt wird, wobei durch die programmgesteuerte Rotation der Lünette eine Kollision zwischen den geöffneten Spannelementen der Lünette und dem Werkstück verhindert wird.

7. Verfahren nach einem der Ansprüche 1 bis 6, **dadurch gekennzeichnet, dass** die Lünette bei der rotierenden Bearbeitung des Werkstücks zwischen den Spannstellen angeordnet ist und das Werkstück spannt und synchron zu den Antrieben der Spannstellen über einen Drehantrieb mitdreht so dass Torsionsspannungen im Werkstück reduziert oder verhindert werden.

8. Einrichtung zur Bearbeitung von länglichen, nicht rotationssymmetrischen Werkstücken in Form von Turbinenschaufeln, wobei eine erste Spannstelle für das Spannen eines ersten Endes des Werkstückes und eine zweite Spannstelle für das Spannen eines zweiten Endes des Werkstückes vorgesehen sind und das Werkstück mittels einer Lünette abgestützt wird, die entlang einer Längsachse des Werkstückes bewegbar ist und zum Spannen des Werkstückes auf dessen nicht rotationssymmetrischen Querschnitt Spannelemente aufweist,
wobei
die Spannelemente an einem Drehteil angeordnet und zwischen einer geschlossenen Spannstellung, mit welcher das Werkstück spannbar ist, und einer geöffneten Stellung, in der das Werkstück freigegeben ist, bewegbar sind, dadurch gekennzeichet,
- dass das Drehteil einen separaten Drehantrieb aufweist und
- dass die Einrichtung eine Steuerung zur programmgesteuerten Rotation des Drehteils der Lünette bei einer Verstellung der Lünette entlang einer Längsachse des Werkstückes aufweist, wobei die Spannelemente bei der Verstellung der Lünette in der geöffneten Position angeordnet sind.

9. Einrichtung nach Anspruch 8, **dadurch gekennzeichnet, dass** die Lünette mittels eines Schlittens und zugehöriger Führungen entlang der Längsachse der ersten und zweiten Spannstellen verfahrbar ist, wobei die Längsachsen der Spannstellen zueinander und zur Längsachse/der Bearbeitungsachse des Werkstückes koaxial sind.

10. Einrichtung nach Anspruch 8 oder 9, **dadurch gekennzeichnet, dass** die Lünette über die erste und/oder oder zweite Spannstelle fahrbar ist und in dieser Position der Bereich zwischen der ersten und der zweiten Spannstelle für das Einlegen und Entnehmen des Werkstückes zugänglich ist.

11. Einrichtung nach Anspruch 10, **dadurch gekennzeichnet, dass** die Lünette einen Durchbruch aufweist, der ein Hindurchragen des Werkstücks und der ersten und/oder zweiten Spannstelle gewährleistet.

12. Einrichtung nach Anspruch 10 oder 11, **dadurch gekennzeichnet, dass** die Lünette ein oder mehrere Spannelemente aufweist, die zwischen einer geschlossenen Spannstellung, mit welcher das Werkstück spannbar ist, und einer geöffneten Stellung bewegbar sind und dass ein lichtes Maß zwischen den Spannelementen Hindurchragen der ersten und/oder zweiten Spannstelle gewährleistet.

13. Einrichtung nach einem der Ansprüche 8 bis 12, **dadurch gekennzeichnet, dass** das Drehteil in einem Grundkörper drehbar gelagert ist.

14. Einrichtung nach einem der Ansprüche 8 bis 13, **dadurch gekennzeichnet, dass** das Drehteil und der Grundkörper umfangsseitig geschlossen sind.

15. Einrichtung nach einem der Ansprüche 8 bis 14, **dadurch gekennzeichnet, dass** die Spannelemente der Lünette in einer Andockposition mit korrespondierenden Hydraulikelementen verbindbar oder trennbar sind und dass das Drehteil erst nach dem trennen der Verbindung drehbar ist.

## Claims

1. A method for machining elongated workpieces that are not rotationally symmetrical in the form of turbine blades, wherein a first clamping point is provided for a first end of the workpiece and a second clamping point for a second end, and a support of the workpiece occurs by means of a steady rest which comprises clamping elements for clamping the workpiece on the cross-section thereof that is not rotationally symmetrical, **characterized in that**
- after the clamping of the workpiece between the first and second clamping point the steady rest moves with its open clamping elements along the longitudinal axis of the workpiece into a supporting position, and
- during the moving of the steady rest into the supporting position and/or while the supporting position of the steady rest is changed a collision between the open clamping elements of the steady rest and the workpiece is prevented by a program-controlled rotation of a rotary part of the steady rest.

2. A method according to claim 1, **characterized in that** the steady rest for loading and unloading the workpiece travels at least partly over the first or second clamping point, such that the region between the first and the second clamping point is accessible for inserting and clamping of the workpiece.

3. A method according to claim 1 or 2, **characterized in that** in the supporting position the steady rest clamps the workpiece by means of one or several clamping elements and the machining of the workpiece occurs subsequently.

4. A method according to one of the claims 1 to 3, **characterized in that** the clamping elements of the steady rest are arranged in form of hydraulic clamping elements which are situated on the rotary part of the steady rest, and the rotary part of the steady rest is twisted to a docking position for actuating the clamping elements in which a connection to corresponding hydraulic elements can be produced and severed.

5. A method according to one of the claims 1 to 4, **characterized in that** in the docking position a hydraulic pressure is coupled to the clamping elements via the hydraulic elements and the workpiece is thus tensioned and clamped, and subsequently the connection to the hydraulic elements is released by maintaining the clamping and subsequently the rotary part of the steady rest is rotatable from the docking position and the machining of the workpiece occurs.

6. A method according to one of the claims 1 to 5, **characterized in that** for machining the region of the workpiece which is covered by the steady rest its clamping to the workpiece is released, the steady rest is displaced along the machining axis, and is selectively tensioned and clamped again at another position, wherein a collision between the open clamping elements of the steady rest and the workpiece is prevented by the programme-controlled rotation of the steady rest.

7. A method according to one of the claims 1 to 6, **characterized in that** the steady rest is arranged between the clamping points during the rotating machining of the workpiece, and clamps the workpiece and co-rotates said workpiece synchronously to the drives of the clamping points via a rotary drive, so that torsional stresses in the workpiece are reduced or prevented.

8. A device for machining elongated workpieces that are not rotationally symmetrical in the form of turbine blades, wherein a first clamping point is provided for the clamping of a first end of the workpiece and a second clamping point for the clamping of a second end of the workpiece, and the workpiece is supported by means of a steady rest which can be moved along a longitudinal axis of the workpiece and comprises clamping elements for clamping the workpiece on its cross-section that is not rotationally symmetrical, wherein the clamping elements are arranged on a rotary part and can be moved between a closed clamping position with which the workpiece can be clamped and an open position in which the workpiece is released, **characterized in that**
- the rotary part comprises a separate rotary drive, and
- the device comprises a control unit for the programme-controlled rotation of the rotary part of the steady rest during a displacement of the steady rest along a longitudinal axis of the workpiece, wherein the clamping elements are arranged in the open position during the displacement of the steady rest.

9. A device according to claim 8, **characterized in that** the steady rest is displaceable by means of a carriage and associated guides along the longitudinal axis of the first and second clamping points, wherein the longitudinal axes of the clamping points are coaxial with respect to each other and to the longitudinal axis/machining axis of the workpiece.

10. A device according to claim 8 or 9, **characterized in that** the steady rest can travel over the first and/or second clamping point and in this position the region between the first and the second clamping point is accessible for the insertion and removal of the workpiece.

11. A device according to claim 10, **characterized in that** the steady rest comprises a breakthrough which allows the workpiece and the first and/or second clamping point to protrude through said breakthrough.

12. A device according to claim 10 or 11, **characterized in that** the steady rest comprises one or several clamping elements which are movable between a closed clamping position with which the workpiece can be clamped and an open position, and a clearance between the clamping elements ensures that the first and/or second clamping point can protrude through said clearance.

13. A device according to one of the claims 8 to 12, **characterized in that** the rotary part is rotatably mounted in a base body.

14. A device according to one of the claims 8 to 13, **characterized in that** the rotary part and the base body are circumferentially enclosed.

15. A device according to one of the claims 8 to 14, **characterized in that** the clamping elements of the steady rest are connectable to or severable from corresponding hydraulic elements in a docking position, and the rotary part is only rotatable after the severing of the connection.

## Revendications

1. Procédé pour l'usinage de pièces d'oeuvres allongées non symétriques dans le sens de la rotation formant des pales de turbine, dans lequel un premier point de serrage est prévu pour une première extrémité de la pièce d'oeuvre et un deuxième point de serrage pour une deuxième extrémité de la pièce d'oeuvre et la pièce d'oeuvre est soutenue au moyen d'une lunette qui présente des éléments de serrage pour serrer la pièce d'oeuvre sur la section non symétrique dans le sens de la rotation de celle-ci, **caractérisé en ce que**
- après le serrage de la pièce d'oeuvre entre le premier point de serrage et le deuxième, la lunette se déplace avec ses éléments de serrage ouverts le long de l'axe longitudinal de la pièce d'oeuvre vers une position d'appui
et
- **en ce que** pendant le déplacement de la lunette dans la position d'appui et/ou lors du changement de position d'appui de la lunette, une collision entre l'élément de serrage ouvert de la lunette et la pièce d'oeuvre est évitée par une rotation contrôlée par un programme d'une partie rotative de la lunette.

2. Procédé selon la revendication 1, **caractérisé en ce que** la lunette se déplace au moins partiellement par-dessus le premier point de serrage ou le deuxième pour le chargement et le déchargement de la pièce d'oeuvre, de telle façon que la zone comprise entre le premier point de serrage et le deuxième soit accessible pour la mise en place et le serrage de la pièce d'oeuvre.

3. Procédé selon la revendication 1 ou 2, **caractérisé en ce que** dans la position d'appui, la lunette serre la pièce d'oeuvre au moyen d'un ou plusieurs éléments de serrage, après quoi la pièce d'oeuvre est usinée.

4. Procédé selon l'une des revendications 1 à 3, **caractérisé en ce que** les éléments de serrage de la lunette sont conçus comme des éléments de serrage hydrauliques qui se trouvent sur la partie rotative de la lunette et **en ce que** la partie rotative de la lunette est tournée pour actionner les éléments de serrage dans une position d'accostage dans laquelle une communication avec des éléments hydrauliques correspondants peut être établie et coupée.

5. Procédé selon l'une des revendications 1 à 4, **caractérisé en ce que** dans la position d'accostage, les éléments hydrauliques transmettent une pression hydraulique aux éléments de serrage et la pièce d'oeuvre est ainsi serrée et bloquée, et **en ce que** la communication avec les éléments hydrauliques est ensuite coupée tout en maintenant le serrage et la partie rotative de la lunette peut ensuite tourner pour quitter la position d'accostage et la pièce d'oeuvre est usinée.

6. Procédé selon l'une des revendications 1 à 5, **caractérisé en ce que** pour usiner la partie de la pièce d'oeuvre recouverte par la lunette, le serrage de celle-ci sur la pièce d'oeuvre est défait, la lunette est déplacée le long de l'axe d'usinage et resserrée et bloquée si nécessaire dans une autre position, la rotation contrôlée par programme de la lunette empêchant pendant ce temps une collision entre les éléments de serrage ouverts de la lunette et la pièce d'oeuvre.

7. Procédé selon l'une des revendications 1 à 6, **caractérisé en ce que** la lunette est disposée entre les points de serrage pendant l'usinage rotatif de la pièce d'oeuvre et serre la pièce d'oeuvre et tourne de façon synchrone des entraînements des points de serrage par l'intermédiaire d'un entraînement en rotation, de sort que les contraintes en torsion exercées dans la pièce d'oeuvre sont réduites ou empêchées.

8. Dispositif pour l'usinage de pièces d'oeuvres allongées non symétriques dans le sens de la rotation formant des pales de turbine, dans lequel un premier point de serrage est prévu pour une première extrémité de la pièce d'oeuvre et un deuxième point de serrage pour une deuxième extrémité de la pièce d'oeuvre et la pièce d'oeuvre est soutenue au moyen d'une lunette capable de se déplacer le long d'un axe longitudinal de la pièce d'oeuvre et qui présente des éléments de serrage pour serrer la pièce d'oeuvre sur la section non symétrique dans le sens de la rotation de celle-ci, dans lequel les éléments de serrage sont disposés sur une partie rotative et peuvent se déplacer entre une position de serrage fermée dans laquelle la pièce d'oeuvre peut être serrée et une position ouverte dans laquelle la pièce d'oeuvre est libérée,
- **caractérisé en ce que** la partie rotative présente un entraînement en rotation séparé et
- **en ce que** le dispositif comprend une commande pour la rotation contrôlée par un programme de la partie rotative de la lunette lors d'un déplacement de la lunette le long d'un axe longitudinal de la pièce d'oeuvre, les éléments de serrage étant disposés dans la position ouverte lors du déplacement de la lunette.

9. Dispositif selon la revendication 8, **caractérisé en ce que** la lunette peut être déplacée au moyen d'un chariot et de guides correspondants le long de l'axe longitudinal des premier et deuxième points de serrage, les axes longitudinaux des points de serrage étant coaxiaux l'un par rapport à l'autre et par rapport à l'axe longitudinal/l'axe d'usinage de la pièce d'oeuvre.

10. Dispositif selon la revendication 8 ou 9, **caractérisé en ce que** la lunette peut être déplacée par-dessus le premier point de serrage et/ou le deuxième et la zone comprise entre le premier point de serrage et le deuxième est accessible dans cette position pour introduire et retirer la pièce d'oeuvre.

11. Dispositif selon la revendication 10, **caractérisé en ce que** la lunette présente une ouverture qui permet à la pièce d'oeuvre et au premier point de serrage et/ou au deuxième de dépasser à travers.

12. Dispositif selon la revendication 10 ou 11, **caractérisé en ce que** la lunette présente un ou plusieurs éléments de serrage qui peuvent être déplacés entre une position de serrage fermée, par laquelle la pièce d'oeuvre peut être serrée, et une position ouverte, et **en ce qu'**une dimension libre entre les éléments de serrage permet au premier point de serrage et/ou au deuxième de dépasser à travers.

13. Dispositif selon l'une des revendications 8 à 12, **caractérisé en ce que** la partie rotative est supportée avec possibilité de rotation dans un corps de base.

14. Dispositif selon l'une des revendications 8 à 13, **caractérisé en ce que** la partie rotative des corps de base est fermée sur sa circonférence.

15. Dispositif selon l'une des revendications 8 à 14, **caractérisé en ce que** les éléments de serrage de la lunette peuvent être mis en communication avec des éléments hydrauliques correspondants ou coupés de ceux-ci dans une position d'accostage et **en ce que** la partie rotative ne peut être tournée qu'après que la communication a été coupée.
